# EUROPEAN PATENT SPECIFICATION

(11) **EP 0 620 167 B1**
(45) Date of publication and mention of the grant of the patent: **25.11.1998**
(21) Application number: 94105569.1
(22) Date of filing: 11.04.1994
(51) Int. Cl.: B65F 3/00, B65F 3/14, B60P 1/00

(54) **Refuse collection and compaction vehicle**
Fahrzeug zum Sammeln und Verdichten von Müll
Véhicule pour le ramassage et le compactage des ordures

(30) Priority: 12.04.1993 US 44754
(43) Date of publication of application: 19.10.1994
(73) Proprietor: Boivin, Claude, Québec, G2K 1Z7 (CA)
(72) Inventor: Boivin, Claude, Québec, G2K 1Z7 (CA)
(74) Representative: Bonnetat, Christian

(56) References cited:
- DE-A- 3 231 002
- DE-C- 3 539 206
- US-A- 5 122 025

## Description

### Field of the Invention

This invention is related to a refuse collection container vehicle having two reception chambers and a mobile over the top feed mechanism for the collection of waste materials.

### Background of the Invention

A need has been developed for a waste collection vehicle which readily differentiates fibrous combustible materials from non fibrous materials. Many such vehicles have been developed and one of them, according to the preamble of claim 1, is described in US patent 5,122,025 June 1992 by Glomski, a patent which describes a mobile interior wall which opens and closes storage space in a truck. Glomski utilizes small buckets and repeated compaction in the loading zone, which is not practical for loading.

The art also discloses a German patent DE 3,231,002 10 March 1983 by Fahrzengbau, which discloses a compressible volume defined by the location of a deflector of a hopper; the location of the hopper cannot be modified by the operator nor can be modified the area of loading. This method although effective in use is very complicated in its mechanical structure.

### Summary of the Invention

The object of the present invention is to provide a refuse collection and compaction vehicle as defined in claim 1.

In accordance with one aspect of the present invention there is provided a side charging and over the top loading vehicle which comprises a moveable wall which compresses fibrous materials on the forward stroke and compresses the non fibrous materials on the back stroke. The loading follows the moveable wall on either side by manual displacement of a limit marker. Another object of this invention is to utilize the near totality of the volume of the container to store fibrous and non fibrous materials and a further object is to allow the loading of two different materials and to allow the relative compaction of both.

Another objective is to optimize the spreading of the charge in the bin because side loading implies a large proportion of the charge falling always at the same spot near the loading side.

A further objective is to allow a variable volume in each of the compartments, resulting from compaction on each side of the partition and up to the top and to provide ease of unloading.

A general objective is to provide a dual compartment compaction vehicle comprising a housing such as a container of generally cubical shape with a fore end, an aft end, a roof, a floor, two sides, a length and a generally rectangular, constant dimension cross section extending from the fore end to the aft end, and defining an interior storage area. An interior wall extending within the interior storage area for defining at least two compartments, the interior wall being attached for movement to selectively alter the respective sizes of the compartments, the interior wall characterized by:
a moveable partition frame installed perpendicularly of the length, and having two upper and lower beams and two lateral beams fixed together by their respective ends and of same dimensions as dimensions of the cross section, the moveable partition frame comprising a compaction door of generally same dimensions as the moveable partition frame and fixed within the moveable partition frame, the compaction door comprising a door top being hinged to the upper beam and a door bottom being releasably locked to the lower beam, the compaction door separating the interior space of the container into two compartments receiving different waste materials to be compacted between the compaction door and the fore and aft ends,
hinge means attached to the upper beam for pivotally retaining the door top when the door bottom is released,
hydraulic means comprising cylinder means oriented lengthwise within the housing and attached to a pair of channels also installed lengthwise, the hydraulic means also comprising piston means attached to the moveable partition frame for perpendicularly displacing the moveable partition frame towards the aft end and from the aft end towards the fore end, the moveable partition frame being supported by a pair of rectangular tubes disposed lengthwise and adapted to fit within the opening of the channels for sliding in cooperation with the channels.

To provide in the dual compartment compaction vehicle an access door within the limits of the compaction door and means for locking the access door thereon, and to extend means for locking the compaction door into the channels and into the floor.

And particularly provide locking bars adapted to be inserted into anchor points of the moveable partition frame, the locking bars mounted on opposite arms of a pivoted bar lever with a pivot point installed on the compaction door, the pivoted bar lever having an arm having a spring biased towards normally maintaining the locking bars in the anchor points, the action of pushing against one arm counter to the spring causing the retrieval of the locking bars and the unlocking of the compaction door from the moveable partition frame.

### Brief Description of the Drawings

The present invention will be further understood from the following description with reference to the drawings in which:
FIG.1 is a view from the right side of a truck.
FIG.2a is a cut view from the back illustrating dumping into a truck container, with bucket down.
FIG.2b is a cut view from the back illustrating dumping into a truck container, with bucket up.
FIG.3 is a perspective showing the inside of the container.
FIG.4 is a perspective as per FIG.3 showing structural elements.
FIG.5 is a face view of the compression wall seen from the back of the container.
FIGS. 6a-6d are schematic illustrations of a compaction sequence
FIG.7a is view of FIG 1 with rear door open.
FIG.7b is a view of FIG 7a with container dumping.
FIG.8 is the view of FIG.7b in a different sequence, without a screen.

### Detailed Description

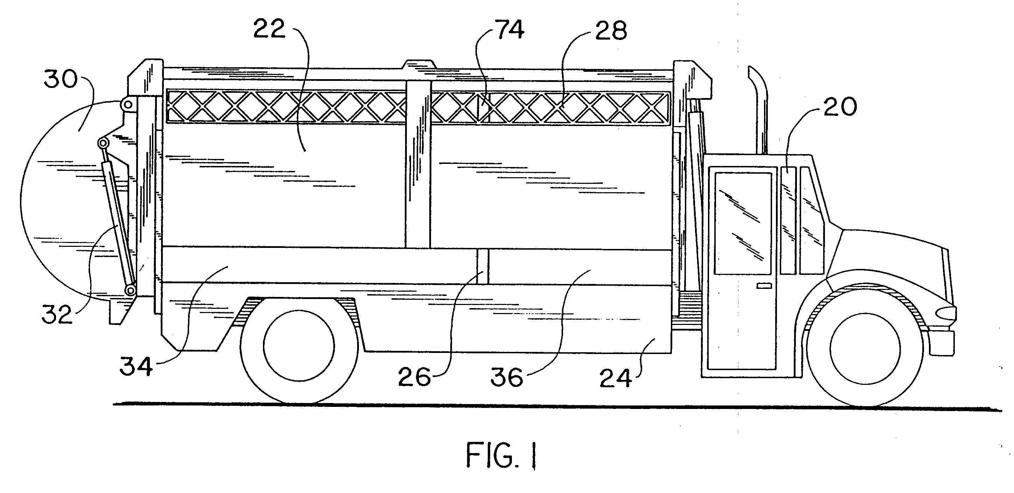

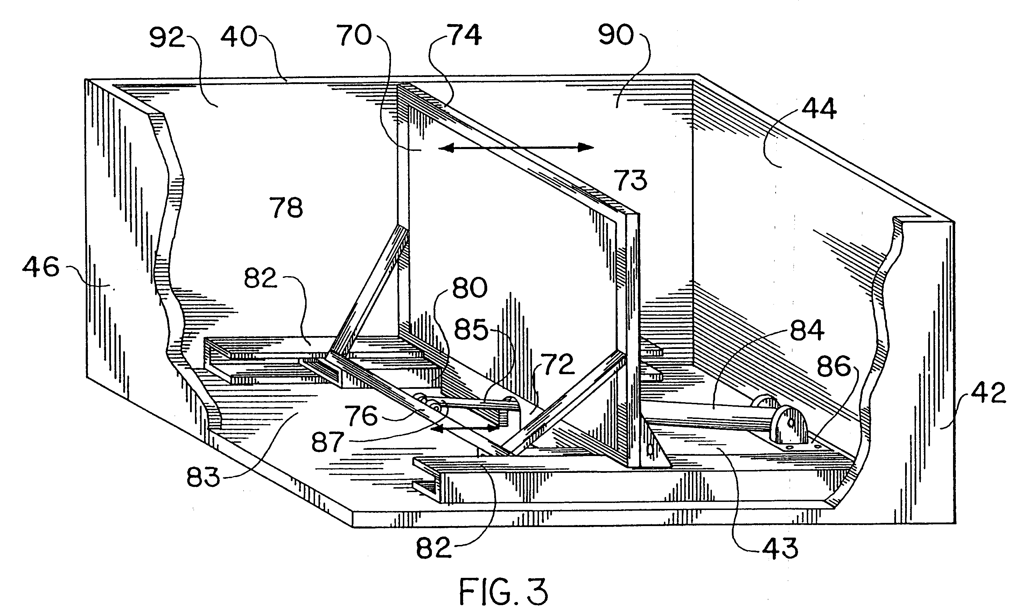

Referring to FIG 1, there is illustrated a vehicle (20) carrying a container (22) on which is mounted a refuse collection structure which consists in a lateral loading bucket (24) provided with a partition (26) to divide two sets of loading materials. A screen (28) allows for the observation of the level of materials inside container (22). The container comprises an exit or aft end (44) with an exit door (30) opened by means of a hydraulic cylinder (32). The exit door (30) is preferably of hemispheroidal shape to allow for increased compaction. The lateral loading bucket (24) includes a manually placed partition (26) which limits the spread of two classes of refuse, i.e. one class of generally combustible and paper base materials towards the back (34) and another class of plastic, metal and glass towards the front (36). The container is provided with a fore end (46) (FIG. 3) and an aft end (44), a right side (40), a left side (42) and a floor (43).

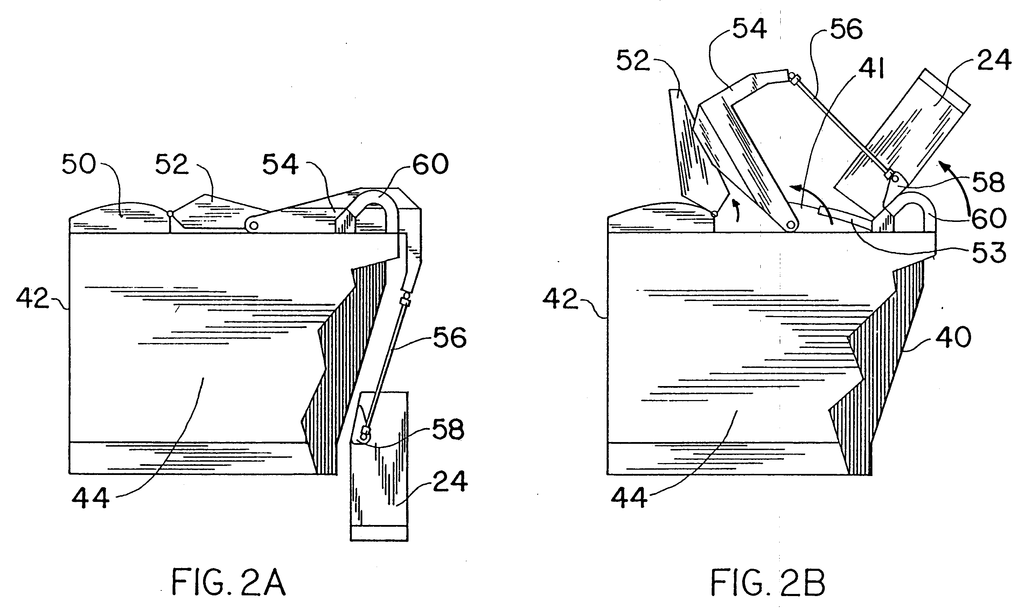

The container is charged from the top (41) (FIG.2) on the right side (40). FIGS 2a-2b illustrate views from the back of the container and illustrate the principle of charging refuse into the interior of the container. Refuse are loaded into the lateral loading bucket (24) which is found on the right side (40) of the vehicle. When the bucket is full, the operator commands the extension of a roof hydraulic cylinder (53) which pivots a roof cover (54) with central cover (52) and end cover (50) towards the left side (42). The roof cover (54), by means of a lever (56) fixed at its inferior end, drives upwardly a guide (58) which is fixed on the lateral loading bucket (24) by means of a pivot anchor. The movement of the guide is channelled by a rail (60). When the guide reaches the end of the course, the lateral loading bucket (24) finds itself in a position and at an angle such that the refuse are dumped longitudinally in the middle of the container (22) (FIG 1) causing thus a better distribution lengthwise in the interior of the container.

FIG.3 illustrates in an open view of the interior of the container a reversing mobile structure compacting refuse. The compacting structure separates the container in two compartments, namely a back compartment (90) and a forward compartment (92), the two compartments serving to separate the two distinct classes of refuse. The compacting structure is made to be displaced longitudinally forward and backward by means of the extension and retraction of a hydraulic cylinder (84) attached at the fixed end (86) to the floor of the back compartment (90) and at the moveable end (87) to the transverse beam (76) of the mobile structure. The extension and the retraction of the hydraulic cylinder (84) acts on the transverse beam (76) which entrains the whole of the mobile structure including supporting and sliding rectangular tubes (80) which are guiding longitudinally the structure. The rectangular tubes (80) serve as a base to the moving structure and slide within the confines of a pair of C-shaped channels (82) fixed to the floor of the container by means of welding (83).

A piston rod (85) in the preferred embodiment has a displacement of five feet; the fixed end (86) of the hydraulic cylinder (84) may be attached on further displacement means such as a second five foot piston which would start acting at the end of the displacement of the first piston, or other means such as a rack and pinion which would allow increased displacement to 4.5 metres in a 7.6 metre bin container. Hydraulic cylinder (84) may also be attached on different anchor points manually, to provide different volume configurations.

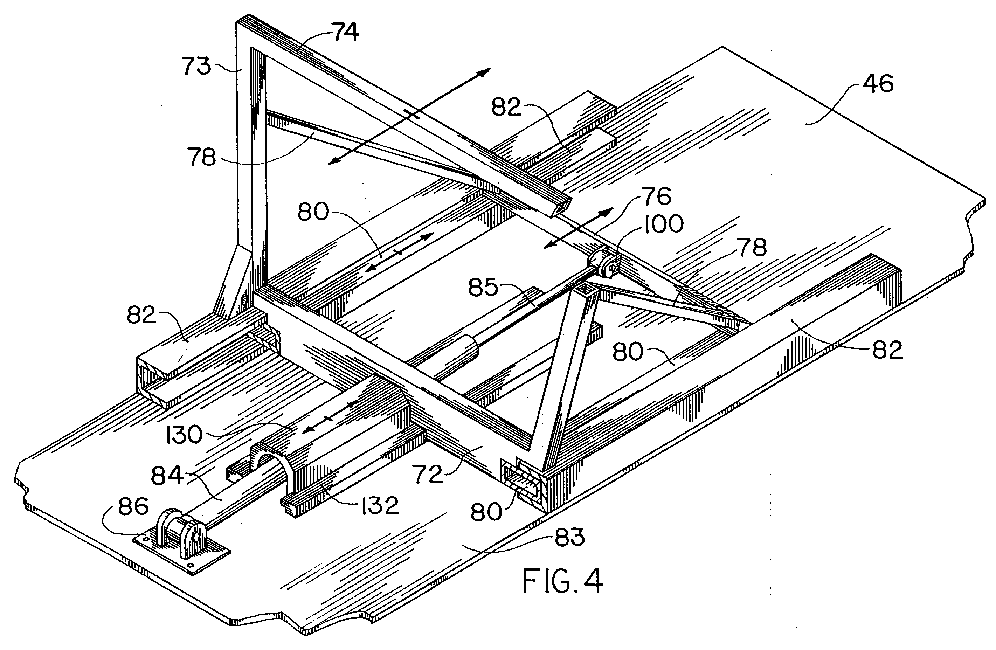

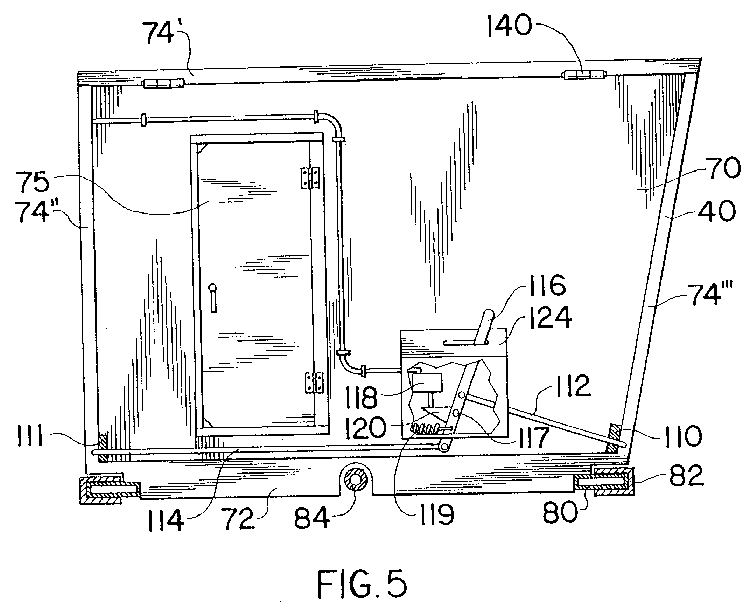

FIG.4 offers a detailed view of the compacting structure. The moveable end (87) of the hydraulic cylinder (84) is attached to the transverse beam (76) by means of a pivot (100). Two reinforcing bars (78) welded to the transverse beam (76) relate the transverse beam (76) to a moveable partition frame (74) of a displaceable wall (73). The lower beam (72) of the moveable partition frame (74) rests on two lateral rectangular tubes (80) which slide on the C-shaped channels (82). The C-shaped channels (82) on the sides guide the lower beam (72) over a course of 1.5 metres or more. A central guide C-shaped channels (132) guides a sheath (130) which protects the hydraulic cylinder (84) against undesirable refuse. The sheath (130) acts as a protection cover fixed to the moveable partition frame (74) of displaceable wall (73) at the lower beam (72) of the structure, the, sheath (130) following the displacement of piston rod (85). The wall structurally consists in the moveable partition frame (74) (FIG 5) which comprises, at an inferior part, the lower beam 72, at a superior part, an upper beam (74'), at a left part, a lateral beam (74'') and at a right part, a lateral beam (74'''). In the moveable partition frame (74), there is a compaction door (70) which covers the interior of the moveable partition frame (74) and which is sufficiently rigid to account for the effect of compaction. An equally rigid access door (75) in compaction door (70) allows passage from one compartment to the other. Right and left locking bars (112 and 114) locking the compaction door (70) onto the moveable partition frame (74), may be released from right and left anchor points (110 and 111) by means of a mechanism manually operated by a lever (116), or activated from a cab by a pneumatic actuator (118) which moves a support (120) downwards causing lever (116) to move to the left counterclockwise and pivotally around a pivot (117). A spring (119) is biased towards normally maintaining right and left locking bars (112 and 114) in the right and left anchor points (110 and 111). The door is released at the door bottom to pivot at the door top, on hinges (140) and let pass the charge located in a forward compartment (92) (FIG 3) to a back compartment (90). The charge spreads over a height of 1.8 metre high but hardly more than 1.5 metres across the width of the container, so it is important that the displaceable wall (73) be extended up to the top, serving as deflector to stop materials from changing compartment.

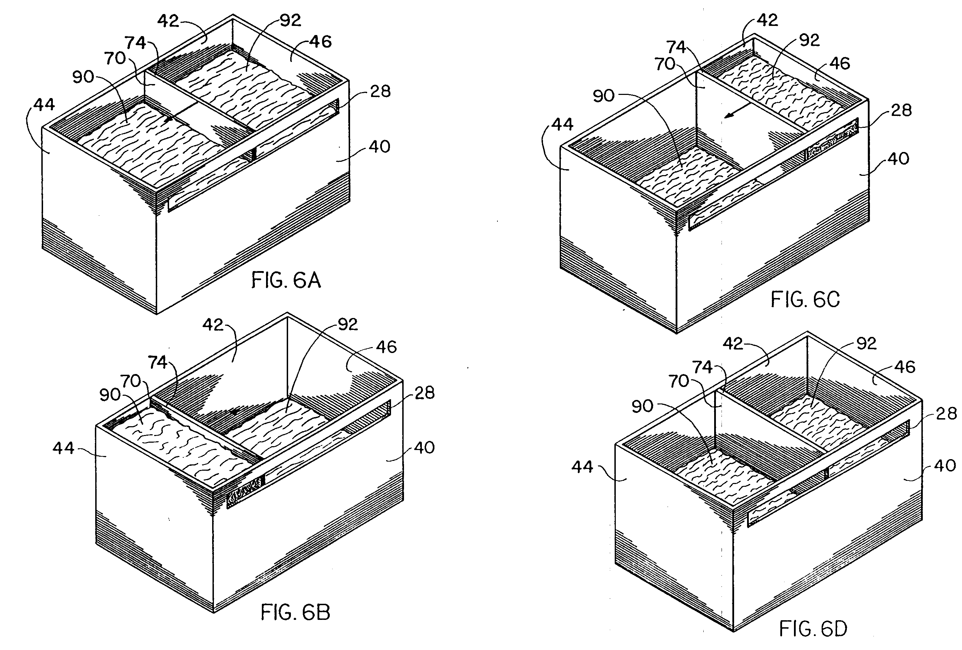

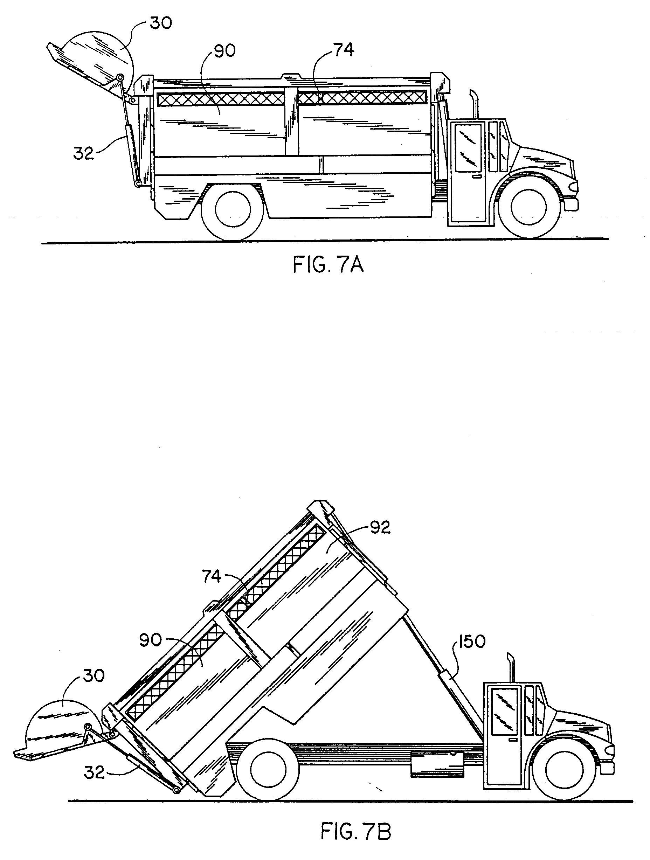

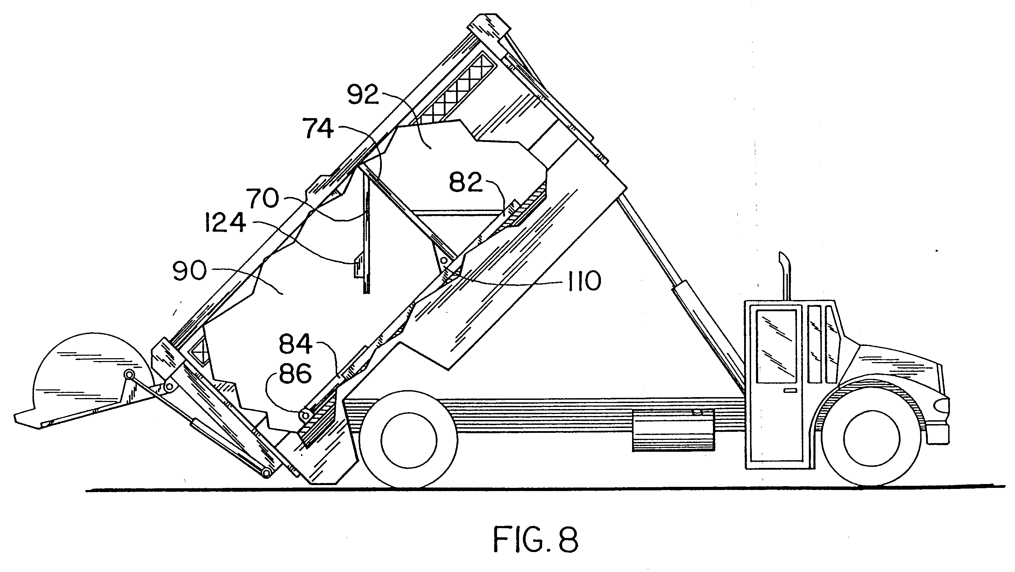

FIG.6 illustrates the relative effect of compacting of two types of refuse materials in the two compartments of the container. The moving of the displaceable wall (73) towards the aft end (44) or towards the front end wall (46) causes the compacting of the materials, and the operator by watching a screen (28) may supervise the extent of the motion of the moveable partition frame (74) and thereby the level of materials accumulated in the respective compartments. When the container is deemed sufficiently full the operator may proceed with the evacuation of each section of the container in their respective discharging sites. As a first step, as appears in FIG.7A the operator commands the extension of door hydraulic cylinder (32) which as a result causes the raising of the back door (30) to the level of the roof of the container. Once the back door is open the container may pivot (FIG.7B) towards the aft end (44) by means of a lift hydraulic cylinder (150). To facilitate the unloading, the operator may displace backwardly the moveable partition frame (74), of which the superior part (74') may easily be seen through the screen (28) as it moves towards the aft end (44) and thus displaces the refuse materials in the back compartment (90) towards the exit of the aft end (44). Once the back compartment (90) is empty one may proceed with the discharging of the materials from the forward compartment (92) into a different unloading site. As illustrated in FIG.8 the disengagement of the anchor locking system (124) (FIG.5) of compaction door (70) from moveable partition frame (74), compaction door (70) being thus liberated at its lower end from the moveable partition frame (74); the door will then easily pivot on hinges installed on the upper beam (74') part of the moveable partition frame (74), when the container is in a position tilted towards the aft end (44). The refuse materials which are no longer under the effect of the compacting because of the displacement of the moveable partition frame (74) towards the aft end (44), jump through the opening of moveable partition frame (74) and towards the aft end (44). The compaction door (70) may be released by means of a mechanism manually operated or activated from the cab, opening from the bottom while pivoting at the top and letting pass the charge located in the forward compartment (92) of the container.

A preferred embodiment and a minor variation of the subject invention is described herein. However, it will be understood that other embodiments and variations of the one described are possible within the scope of the invention which is limited only by the scope of the appended claims:

## Claims

1. A dual compartment compaction vehicle comprising a container (22) having a fore end (46), an aft end (44), a roof, a floor (43), two lateral walls, a length and a generally rectangular, constant dimension, cross section extending from said fore end (46) to said aft end (44) and defining an interior storage area, an interior wall extending within said interior storage area for defining two compartments within said interior storage area, said interior wall being attached for movement to selectively alter the respective sizes of said compartments, said interior wall comprising a moveable partition frame (74) being supported by a pair of tubes (80) disposed lengthwise with respect to the container and adapted to fit within two channels (82) extending longitudinally along the container for sliding in cooperation with said channels, a partition door (70) fixed within the limits thereof and hydraulic means comprising cylinder means (84) oriented lengthwise within said container, said hydraulic means also comprising piston means (85) attached to said moveable partition frame (74) for displacing said moveable partition frame (74) towards said aft end (44) and from said aft end (44) towards said fore end (46), said compaction vehicle characterized by:
said moveable partition frame (74) being installed perpendicularly with respect to said length and having two upper (74') and lower (72) beams and two lateral beams (74'' and 74''') fixed together by their respective ends and of same dimension as the dimensions of said cross section, said partition door being a compaction door (70) of generally same dimensions as of said moveable partition frame (74), and comprising a door top being hinged (140) to said upper beam and a door bottom being releasably locked to said lower beam (72), said two compartments receiving different waste materials to be compacted between said compaction door and said fore and aft ends,
means attached to said upper beam for pivotally retaining said door top when said door bottom is released.

2. A dual compartment compaction vehicle as defined in claim 1 wherein said compaction door (70) comprises an access door (75) within the limits of said compaction door (70) and comprises means for locking said access door (75) against said compaction door (70).

3. A dual compartment compaction vehicle as defined in claim 2 wherein said means for locking said compaction door (70) onto said moveable partition frame (74) comprise locking bars (112 and 114) adapted to be inserted into anchor points (110 and 111) of said moveable partition frame (74), said locking bars being mounted on opposite arms of a pivoted bar lever (116) with a pivot point (117) installed on said compaction door (70), said pivoted bar lever (116) having an arm having a spring (119) biased towards normally maintaining said locking bars (112 and 114) in said anchor points (110 and 111), the action of pushing against one arm counter to said spring (119) causing the retrieval of said locking bars (112 and 114) and the unlocking of said compaction door (70) from said moveable partition frame (74).

4. A dual compartment compaction vehicle as defined in claim 1 wherein said channels (82) are C-shaped channels installed on said floor (43).

## Patentansprüche

1. Ein Doppelkanmer-Verdichtungsfahrzeug bestehend aus einem Transportbehälter (22) mit einem vorderen Ende (46), einem hinteren Ende (44), einem Dach, einem Boden (43), zwei Seitenwänden, einer Länge und einem in etwa rechtwinkligen Querprofil mit konstanten Maßen, das sich vom vorderen Ende (46) zum hinteren Ende (44) erstreckt und einen inneren Stauraum bildet, wobei sich eine Innenwand in dem inneren Stauraum erstreckt, um in dem inneren Stauraum zwei Zwischenabteilungen zu bilden, wobei die Innenwand beweglich angebracht ist, um die entsprechenden Raumgrößen der Zwischenabteilungen wahlweise zu verändern, wobei die Innenwand einen beweglichen Teilungsrahmen (74) umfaßt, der von einem Paar Rohre (80) gehalten wird, die längs zum Transportbehälter angebracht und so ausgelegt sind, daß sie in zwei Führungen (82) passen, welche entlang des Transportbehälters in Längsrichtung verlaufen, und wobei die Hohlträger in Wechselwirkung mit den Führungen gleiten, wobei eine durch den Teilungsrahmen begrenzte Raumteiler-Tür (70) befestigt ist und Hydraulikmittel ein Zylindermittel (84) umfassen, die der Länge nach in dem Transportbehälter ausgerichtet sind, wobei die Hydraulikmittel außerdem Kolbenmittel (85) umfassen, die an dem beweglichen Teilungsrahmen (74) angebracht sind, um diesen beweglichen Teilungsrahmen (74) in Richtung auf das hintere Ende (44) und von diesem hinteren Ende (44) hin zu dem vorderen Ende (46) verschieben zu können, wobei das Verdichtungsfahrzeug dadurch gekennzeichnet ist, daß
der bewegliche Teilungsrahmen (74) rechtwinklig in Bezug zur Längsrichtung installiert ist und zwei obere (74') und untere Träger (72) sowie zwei Seitenträger (74'' und 74' '') aufweist, die an den jeweiligen Enden miteinander verbunden sind und die gleichen Maße wie die Maße des Querprofils aufweisen, wobei die Raumteiler-Tür eine Verdichtungstür (70) mit in etwa gleichen Maßen wie die des beweglichen Teilungsrahmens (74) ist und einen oberen Bereich umfaßt, der an dem oberen Träger um ein Gelenk (140) drehbar gelagert ist und einen unteren Bereich umfaßt, der mit dem unteren Träger (72) lösbar verriegelt ist, wobei die beiden Abteilungen Abfallmaterialien unterschiedlicher Art zur Verdichtung zwischen der Verdichtungstür und den vorderen und hinteren Enden aufnehmen werden,
wobei Mittel an dem oberen Träger für eine drehbare Halterung des oberen Teils der Tür angebracht sind, wenn die Sperrung am unteren Teil der Tür freigegeben wird.

2. Ein Zweikammer-Verdichtungs-Fahrzeug nach Anspruch 1, bei dem die Verdichtungstür (70) eine Zugangstür (75) in den Grenzen der Verdichtungstür und Verriegelungsmittel zur Verriegelung der Zugangstür (75) mit der Verdichtungstür (70) umfaßt.

3. Ein Zweikammer-Verdichtungs-Fahrzeug nach Anspruch 2, bei dem die Mittel zur Verriegelung der Verdichtungstür (70) mit dem beweglichen Teilungsrahmen (74) Riegel (112 und 114) umfassen, die dafür ausgelegt sind, in Ankerpunkte (110 und 111) des beweglichen Teilungsrahmens (74) eingesetzt zu werden, wobei die Riegel an gegenüberliegenden Armen eines drehbaren Riegel-Hebels (116) mit einem Drehzapfenpunkt (117) montiert sind, der an der Verdichtungstür (70) angebracht ist, und wobei der Riegel-Hebel (116) einen mit einer Feder (119) ausgerüsteten Arm hat, welche so ausgelegt ist, daß sie normalerweise die Riegel (112 und 114) in den Ankerpunkten (110 und 111) festhält, wobei das Drücken eines Hebelarmes entgegen der Feder (119) die Mitnahme der Riegel (112 und 114) und die Entriegelung der Verdichtungstür (70) von dem beweglichen Teilungsrahmen (74) bewirkt.

4. Ein Zweikammer-Verdichtungs-Fahrzeug nach Anspruch 1, bei dem die Führungen (82) auf dem Boden (43) installierte C-Profilführungen sind.

## Revendications

1. Véhicule de compactage à double compartiment comprenant un conteneur (22) ayant une extrémité avant (46), une extrémité arrière (44), un toit, un plancher (43), deux parois latérales, une longueur et une section transversale généralement rectangulaire, de dimension constante, s'étendant de ladite extrémité avant (46) vers ladite extrémité arrière (44) et définissant une zone de stockage intérieure, une paroi intérieure s'étendant dans ladite zone de stockage intérieure pour définir deux compartiments dans ladite zone de stockage intérieure, ladite paroi intérieure étant fixée en mouvement pour modifier sélectivement les dimensions respectives desdits compartiments, ladite paroi intérieure comprenant un cadre de séparation déplaçable (74) qui est supporté par une paire de tubes (80) disposés longitudinalement par rapport au conteneur et adaptés pour s'agencer dans deux profilés (82) s'étendant longitudinalement le long du conteneur pour coulisser en coopération avec lesdits profilés, une porte de séparation (70) fixée dans les limites de celui-ci et des moyens hydrauliques comprenant des moyens à cylindre (84) orientés longitudinalement dans ledit conteneur, lesdits moyens hydrauliques comprenant également des moyens à piston (85) fixés audit cadre de séparation déplaçable (74) pour déplacer ledit cadre de séparation déplaçable (74) vers ladite extrémité arrière (44) et à partir de ladite extrémité arrière (44) vers ladite extrémité avant (46), ledit véhicule de compactage étant caractérisé en ce que :
- ledit cadre de séparation déplaçable (74) est installé perpendiculairement par rapport à ladite longueur et présente deux poutres supérieure (74') et inférieure (72) et deux poutres latérales (74'' et 74''') fixées ensemble par leurs extrémités respectives et de mêmes dimensions que les dimensions de ladite section transversale, ladite porte de séparation étant une porte de compactage (70) de dimensions généralement identiques à celles dudit cadre de séparation déplaçable (74), et comprenant un haut de porte qui est articulé (140) à ladite poutre supérieure et un bas de porte qui est verrouillé, de façon amovible, à ladite poutre inférieure (72), lesdits deux compartiments recevant différentes matières de déchets à compacter entre ladite porte de compactage et lesdites extrémités avant et arrière,
- des moyens sont fixés à ladite poutre supérieure pour retenir, de façon pivotante, ledit haut de porte quand ledit bas de porte est libéré.

2. Véhicule de compactage à double compartiment selon la revendication 1,
dans lequel ladite porte de compactage (70) comprend une porte d'accès (75) dans les limites de ladite porte de compactage (70) et comprend des moyens pour verrouiller ladite porte d'accès (75) contre ladite porte de compactage (70).

3. Véhicule de compactage à double compartiment selon la revendication 2,
dans lequel lesdits moyens pour verrouiller ladite porte de compactage (70) sur ledit cadre de séparation déplaçable (74) comprennent des barres de verrouillage (112 et 114) adaptées pour être insérées dans des points d'ancrage (110 et 111) dudit cadre de séparation déplaçable (74), lesdites barres de verrouillage étant montées sur des bras opposés d'un levier à barre articulé (116) ayant un point d'articulation (117) installé sur ladite porte de compactage (110), ledit levier à barre articulé (116) présentant un bras ayant un ressort (119) sollicité pour maintenir normalement lesdites barres de verrouillage (112 et 114) dans lesdits points d'ancrage (110 et 111), l'action de poussée contre un bras à l'encontre dudit ressort (119) provoquant le retrait desdites barres de verrouillage (112 et 114) et le déverrouillage de ladite porte de compactage (70) dudit cadre de séparation déplaçable (74).

4. Véhicule de compactage à double compartiment selon la revendication 1,
dans lequel lesdits profilés (82) sont des profilés en forme de C installés sur ledit plancher (43).
